# EUROPEAN PATENT APPLICATION

(11) **EP 2 248 689 A1**
(43) Date of publication of application: **10.11.2010**
(21) Application number: 10161820.5
(22) Date of filing: 04.05.2010
(51) Int. Cl.: B60D 1/28, B60D 1/06

(54) **Safety device for a towing hook**

(30) Priority: 05.05.2009 DK 200900581
(71) Applicant: Kirk & Malling ApS, 7600 Struer (DK)
(72) Inventor: Kirk, Ove, 7600, Struer (DK); Malling, Svend Aage, 7560, Hjerm (DK)
(74) Representative: Nielsen, Leif

(57) **Abstract**

A safety device (51) for a tow-bar with a towing hook (53) with a neck (54) and a ball head (55) joined thereto which interact with a ball socket (56) for providing a coupling arrangement between a vehicle and a trailer. The safety device has a frame (1) with a releasable mounting fitting (57) for mounting the frame (1) on a towing hook (53) via a first journal (22).
The safety device (51) has a jacket (31) mounted on the frame (1) via a second journal (24) for pivoting between a first position (52) where the jacket (31) is pivoted to a first side (511) so that the ball head (55) and the ball socket (56) can be brought into and out of engagement with each other, respectively, and a second position (62), where the jacket (31) is swung to a second side (513) so that the ball head (55) and the ball socket (56) cannot be brought into and out of mutual engagement.

## Description

### Field of the Invention

A safety device for a tow-bar with a towing hook with a neck and a ball head joined thereto which interact with a ball socket for providing a coupling arrangement between a vehicle and a trailer. The safety device has a frame with a releasable mounting fitting for mounting the frame on a towing hook via a first journal.

The safety device has a jacket mounted on the frame via a second journal for pivoting between a first position where the jacket is pivoted to a first side so that the ball head and the ball socket can be brought into and out of engagement with each other, respectively, and a second position, where the jacket is swung to a second side so that the ball head and the ball socket cannot be brought into and out of mutual engagement.

### Background of the Invention

It is well-known that a trailer can be attached to a vehicle as well as several trailers may be coupled together as a road train.

In general, coupling devices can be described by a male hook which as prevailing standard consists of a ball head, and a female hook which as prevailing standard consists of a ball socket enclosing the ball head. In the present description, ball head is used in the meaning male hook and ball socket in the meaning female hook.

In the present description, a safety device for a coupling arrangement is a device ensuring that the ball socket will not fall off the ball head, or at least makes separation of the ball socket from the ball head difficult.

There are several principles behind prior art solutions for safety devices for coupling arrangements for ensuring that the ball socket which is fastened to the ball head of the towing hook will not fall off.

One principle is based on the fact that after fastening the ball socket to the ball head, a safety bar is *pivoted* in over the ball socket such that the ball socket cannot be lifted off the ball head. This principle is described in US patent 3,730,558, which patent also describes how the horizontal safety bar which is pivoted in horizontal plane is further reinforced by an additional safety rod being turned in vertical plane, thereby supporting and locking the horizontal safety bar. The ball socket is thereby encapsulated by a C-profile consisting of the ball head, the holder of the latter and the safety bar.

A second principle for safeguarding against the ball socket falling off the ball head is constituted by a safety plate having an inverted L-profile is *displaced* in vertical direction such that the foot of the L-profile is moved down over the ball socket which is supposed to surround the ball head. The ball socket is thereby encapsulated by a C-profile consisting of the ball head, the holder of the latter and the displaceable inverted L-profile. This principle is known from CA 2 216 002.

A third principle for safeguarding against the ball socket falling off the ball head is constituted by the ball socket, which is embraced by the ball socket, is surrounded by a C-profile in which a screw is disposed above or below the centre axis of the ball head, where one end of the screw has a shape that fits the outer side of the ball socket. By this device, the ball socket may be *screwed* to the ball head. This principle is known from FR 2 743 759 and FR 2 743 758.

A fourth principle for safeguarding against the ball socket falling off the ball head consists of a plate being *tilted* in over the ball head which is embraced by the ball socket. This principle is described in its simplest form in DE 17 92 501 where a simple cap can be pivoted about an axis going through the holder of the ball head and in over the ball socket.

More modem examples of this principle are known from DE 10 35 192, US 4989892, US 7044494 and US 2006/0226633.

The state of the art seems to be described in the patent US 7,264,261 which indicates a coupling device having a male hook disposed on a lower horizontal arm which is transformed to a horizontal part upon which a safety device is mounted through an axis which is characterised by being tiltable in over the ball head itself when the latter is embraced by the ball socket. This is a unified construction which may be mounted on a vehicle as a coupling device.

### Object of the Invention

The dominating design of tow-bars for cars and small vehicles is of the type with a ball head provided on a neck of a towing hook. This type is frequently characterised by being marked with "ISO 50", referring to the ball head having a spherical part with a diameter of 50 mm. "ISO 50" can be used if the towing hook consists of a cylinder, the neck with a diameter of 29 mm minus 2 mm which goes out into about 3/4 part of a ball, the ball head with a diameter of the said 50 mm minus 0.39 mm. The surface of the ball head is to have a roughness of max. 6.3 micrometers.

The importance of keeping these dimensions is to be seen in connection with the said ball head on the towing hook being coupled together with a ball socket having a complementary shape that just fit the mentioned "ISO 50" dimensions.

The specific problems of connecting a ball socket and a ball head arise when either the ball head or the ball socket - or both - deviate from the specified dimensions. Besides, deviations in roughness of the surface, as e.g. by rust attack, may reduce the efficiency of the coupling.

In such cases, or by common use, the ball socket may inadvertently be released from the ball head, whereby dangerous situations with loose trailers and their contents may occur.

The inadvertent uncoupling of the ball socket from the ball head may be effected by displacement of load on the trailer. This may occur in that load is displaced while driving, as acceleration will typically displace the load in an unwanted direction such that the trailer will result in a force that tend to separate the ball socket from the ball head.

The situation is particularly critical by live animals, as e.g. horses. These animals are agile and conscious of balance. By acceleration, particularly positive, of the trailer, the immediate compensation by an animal would be to step back, resulting in a weight displacement that results in a force trying to separate the ball socket from the ball head.

The mentioned problems are just some of the situations that may release the coupling between vehicle and trailer.

The present invention indicates a safety device providing that the coupling between vehicle and trailer cannot happen as the safety device may easily be mounted and either follow the trailer or the towing vehicle.

Another substantial problem of the said coupling systems consisting of a towing hook with a ball head and a ball socket is that the ball head may easily be damaged.

The damage may occur by mounting and storage, or as usual wear over long time. Efficient protection of the ball head is thus desirable, as damage will result in deviation from current standards as e.g. presented by "ISO 50".

The present invention further indicates protection for primarily the ball head on the towing hook.

Besides indicating solutions to the said problems, the invention differs from prior art by the safety device being capable of being mounted and adjusted on various designs of towing hooks.

And finally, the invention is easy to use as it allows for switching between its plurality of functions in a simple way.

### Description of the Invention

The primary object is achieved by the present invention by a safety device for a tow-bar with a towing hook with a neck and a ball head joined thereto which interact with a ball socket for providing a coupling arrangement between a vehicle and a trailer, as the safety device has a frame including:
- a releasable mounting fitting for mounting the frame on the towing hook via a first journal, the frame forming connection with
- a jacket mounted on the frame via a second journal for pivoting between a first position where the jacket is pivoted to a first side so that the ball head and the ball socket can be brought into and out of engagement with each other, respectively, and
- a second position where the jacket is swung to a second side so that the ball head and the ball socket cannot be brought into and out of mutual engagement.

The frame is constituted by two plane fittings, each having cutout profiles that support the functions of the safety device, and which are mutually displaced in a direction perpendicularly to the plane. The two side fittings are interconnected via a connecting plate which is in the first instance positioned such that there is a free space at both ends of the frame between the two plane fittings.

The frame functions together with a coupled mounting fitting which may be releasably mounted on a plurality of different towing hooks, as well as the frame may be dismounted such that the safety device e.g. may follow the trailer.

By releasable is meant here that the mounting fitting e.g. may be clamped on the towing hook, but the mounting fitting may also be hooked, slid, screwed or in other flexible way attached to the towing hook.

Finally, it may be envisaged that the mounting fitting becomes permanently fixed on the towing hook by a weld or by means of glue.

In the preferred embodiment, the mounting fitting interacts with the frame through the first journal, whereby the angle of the frame with the towing hook may be adjusted such that the other elements of the frame may be disposed at a desirable distance and position relative to the ball head which constitutes one end of the towing hook and which interacts with the ball socket which in turn is mounted on the trailer.

The first journal appears in that the two plane fittings that are part of the frame are each provided with two first holes which, as the two plane fittings are offset, form a first journal.

The first journal can be produced in another way e.g. as an element with a journal mounted between the two fittings in the frame or by a journal - as e.g. a simple cylinder - mounted on a single strand holder with the same effect as the said frame.

In its preferred embodiment, the safety device includes a jacket that interacts with the frame through a second journal appearing by a pair of holes in the plane fittings which are offset. The jacket may be pivoted to one side of the frame, this side being away from the area where the ball head of the towing hook is coupled with the ball socket. In this first position, it is thus possible that the ball head and the ball socket may be brought into and out of engagement with each other.

The design and position of the side fittings in the frame form support for the second journal such that the jacket can be pivoted from the first position at one side of the frame to the second side at the second side of the frame, the second side being the one where the ball head of the towing hook is coupled together with the ball socket. In this second position, the jacket covers the ball socket which is presupposed to be coupled together with the ball head, whereby the coupling cannot be disconnected.

The second journal may also be provided by a cylinder or other kind of bearing mounted on a single ridge.

According to a further embodiment, the safety device according to the invention is peculiar in that the jacket may be pivoted further to the second side to a third position where the jacket is entirely or partially enclosing the ball head when the ball socket is released from the ball head. The ball head is hereby protected against impact, scratches and weather, protecting the shape so that the ball socket can be attached with the expected force.

The safety device may hereby optionally be coupled to a tow-bar, ensuring, depending on the need, that the coupling of the towing hook with the ball socket is not released, and the safety device may protect the ball head according to need as well.

According to a further embodiment, the safety device according to the invention is peculiar in that the frame is provided with a slot in which the mounting fitting is displaceably seated. By such a slot, the position of the safety device relative to the towing hook may be adjusted. The distance between the jacket in the first as well as second positions and the ball head may thus be adjusted by the slot. In addition, it is ensured that the safety device can be used on different towing hooks.

The slot shape is linear in the first instance, but may be curving or have another arbitrary shape. The shape of the slot may be continuous or have notches or other kinds of grips or edges in which the mounting fitting can be positioned, acting as additional safeguard.

In the embodiment in which the frame is formed by two displaced fittings, each fitting is provided with an identical slot in which the first journal has a support point in each. In a second embodiment, the slot in the single strand ridge.

Finally, the slot may be in the mounting fitting itself.

According to a further embodiment, the safety device according to the invention is peculiar in that the mounting fitting has at least one mounting bracket for disposition around the neck. By using mounting brackets, freedom and great flexibility is ensured with regard to the shape, referring primarily to the curvature and the cross-section of the towing hook. Two mounting brackets ensure stability; however, one is enough and more than two just increases stability.

In the first instance, the mounting brackets are U-shaped, but they may be V-shaped like the surface or surfaces of the inner side of the mounting brackets may be smooth or with projections that increase the grip between the mounting brackets and the towing hook.

According to a further embodiment, the safety device according to the invention is peculiar in that the frame is provided with at least one safety bracket for disposition around the neck immediately under the ball head. In its primary embodiment, the safety bracket is U-shaped where between the two legs there is a spacing which is less than the diameter of the ball head. The safety bracket is fastened to the frame in the connecting plate.

If the ball socket is inadvertently attempted removed from the ball head when the safety device is in the second position, it will come in contact with the jacket, whereby forces on the jacket will be transmitted to the frame, which through the safety bracket will encounter an edge or other resistance from the ball head.

The safety device embracing the towing hook is recognised in that the distance between the two legs of the safety bracket is greater than the diameter of the neck, but lesser than the diameter of the ball head.

Furthermore, the safety bracket ensures that the frame and the jacket are not pivoted away from the coupling area by impact or jerks, as the safety bracket encloses the neck of the towing hook.

The safety bracket is described as a U-shaped, dimensionally stable bracket, but may also be envisaged made by means of e.g. steel wire.

According to yet an embodiment, the safety device according to the invention is peculiar in that the jacket is angular with two branches and that the other journal is disposed close to a free end of a first branch. The jacket may thereby be pivoted from one side of the frame to the other side of the frame.

The angular design of the jacket may span from an acute to a right and to an obtuse angle defined by the extensions of the two branches. The jacket is in the first instance provided by bending one plate, but it may also appear by combining several individual pieces.

According to a further embodiment, the safety device according to the invention is peculiar in that a locking arm is swivelling connected with the jacket through a third journal disposed close to a free end of a second branch, that the lock arm and the frame are adapted with at least one projection and a complementary cutout therefor for respective second and third positions. The locking arm may thereby form connection with the frame and stabilise the position of the jacket in relation to the frame.

In an embodiment, the plane fittings in the frame are each provided with two cutouts in which the projection of the lock at the end opposite the end connected to the jacket through the third journal.

In particular, the cutout in the plane fittings for the second position - the safety position - is peculiar in that it leaves an upper edge which provides an extra safeguard against the locking arm falling out of the locking position by impact or the like.

In a second embodiment, the plane fittings in the frame are each provided with two projections, the shape of which fitting the end of the lock at the end opposite the end connected to the jacket through the third journal.

According to a further embodiment, the safety device according to the invention is characterised in that the lock arm is U-shaped, having a leg at each side of the jacket. The bottom of the U is used as handle for operating the lock by releasing the lock arm from or placing the lock arm in the said three positions. The branches extend along each their side of the jacket, thereby providing extra protection of the ball head.

According to a further embodiment, the safety device according to the invention is peculiar in that the first branch of the jacket interacts with the frame around the second journal by a second spring which is prestressed such that the jacket is tilted towards the first side; and the second branch of the jacket interacts with the lock arm around the third journal by a third spring which is prestressed such that the lock arm is tilted towards the second journal.

According to a further embodiment, the safety device according to the invention is peculiar in that it has a split-pin which is disposed at the frame and forms edge with the jacket in its second or third position. In its primary embodiment, each of the two plane side fittings which are displaced have a hole disposed such that they form an axle for the split-pin, and that this axle forms edge with the jacket. By inserting a split-pin in the two holes, the jacket cannot be pivoted from the second position to the first position.

The split-pin can be designed with a lock with a key such that the safety device not only ensures that the coupling between vehicle and trailer is disconnected while driving, but that the trailer also may be secured in order to avoid theft of the trailer.

The holes in the plane fittings may also be inserted individually in a common padlock which will also safeguard against uncoupling of ball socket from ball head while driving and against theft of the trailer as well.

According to a further embodiment, the safety device according to the invention is peculiar in that it is made of stainless steel, by which is provided required strength and the required weather resistance.

However, the material may be other than stainless steel as materials having approximately the same hardness and durability may be chosen. Moreover, various types of material may be selected for the various parts of the safety device.

### Description of the Drawing

The invention will now be explained more closely with reference to the accompanying drawing, wherein:
- Fig. 1: shows a frame with two fittings and one connecting plate;
- Fig. 2: shows the profile of a fitting forming a side in the frame;
- Fig. 3: shows the jacket in cross-section from above;
- Fig. 4: shows the lock for the jacket in cross-section from above;
- Fig. 5: shows the safety device fitted on a towing hook in a first position where the ball socket is uncoupled from the ball head;
- Fig. 6: shows the safety device fitted on a towing hook in a second position where the ball socket is coupled to the ball head;
- Fig. 7: shows the safety device fitted on a towing hook in a third position where the jacket protects the ball head.

### Detailed Description of the Invention

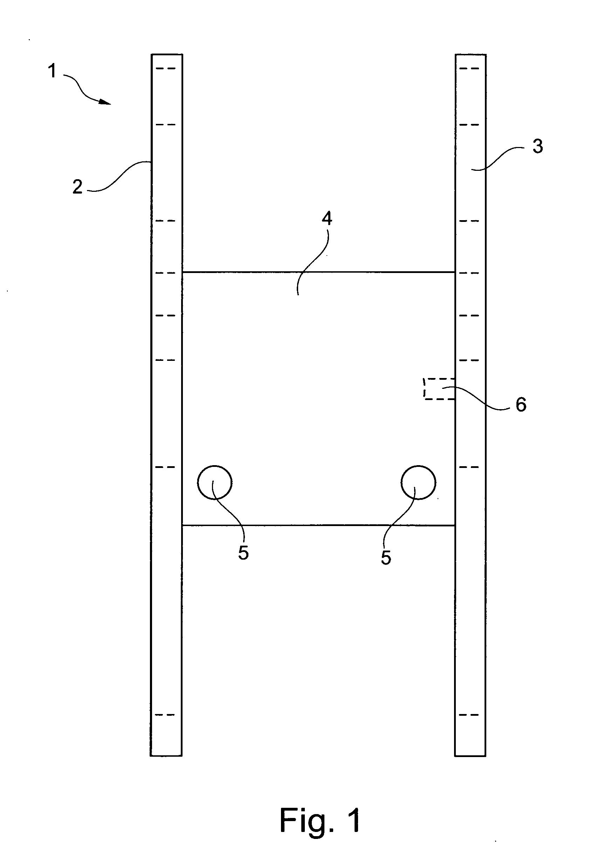

Fig. 1 shows a frame 1 consisting of a first side fitting 2 and a second side fitting 3 which are connected via a connecting plate 4. The connecting plate 4 is provided with holes 5 for a safety bracket which will be described below, and a punched hole 6 for a spring lever.

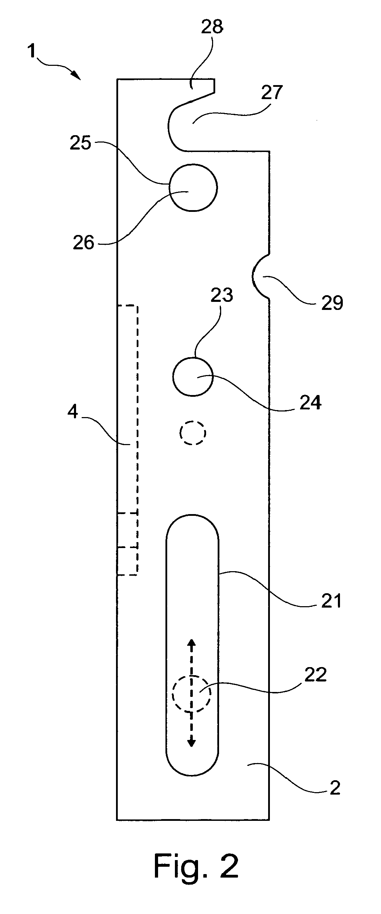

Fig. 2 shows the profile of the first side fitting 2, which profile in the first instance is identical with the profile of the second side fitting 3 belonging to the frame 1. The profile shows that the first side fitting 2 is provided with a slot 21 for a first journal 22, a second hole 23 for a second journal 24, and a third hole 25 for a split-pin described later. Moreover, the first side fitting 2 has a second cutout 27 for a lock arm in second position, which are described below, and the second cutout 27 is provided with a projection 28. Finally, the first side fitting 2 is provided with a third cutout 29 for a lock arm in a third position which is also described later.

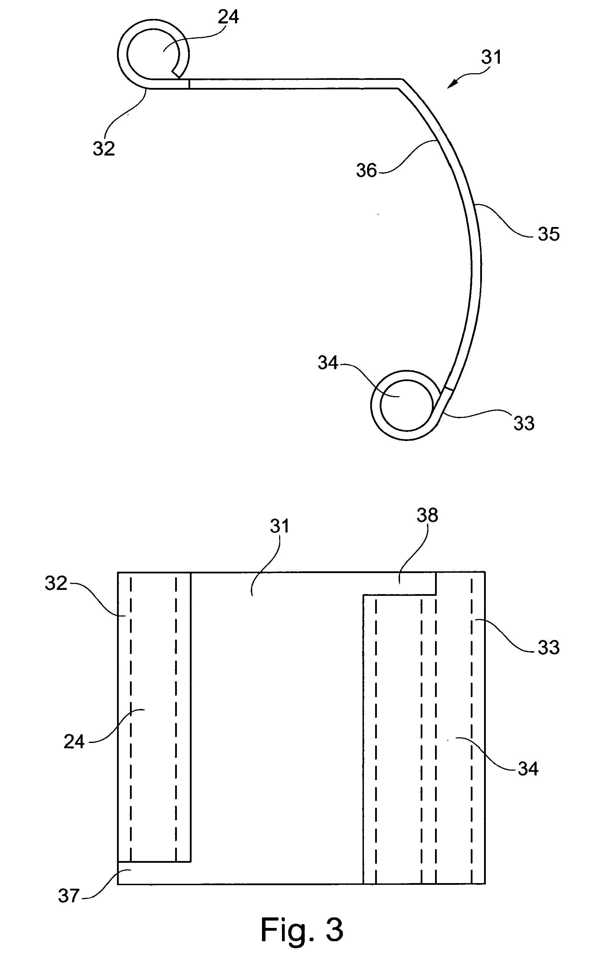

At the top, Fig. 3 shows a cross-section of a jacket 31 with a free end of a first branch 32 enclosing the second journal 24 and with a free end of a second branch 33 enclosing a third journal 34. The jacket 31 has an outer side 35 and an inner side 36.

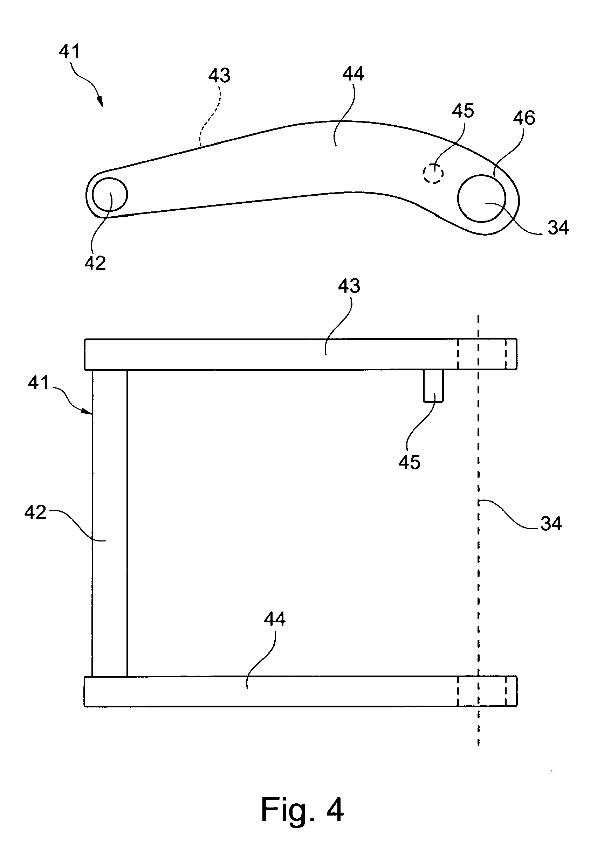

At the bottom, Fig. 3 shows the jacket 31 with the outer side 35, the first end 32 enclosing the second journal 24, the free end of the second branch 33 enclosing the third journal 34. In addition, a cutout for a spring against the frame 37 and a cutout for a spring against a lock arm 38 are seen, where the lock arm is defined later in Fig. 4.

Fig. 4 shows at the top a sideview of a U-shaped lock arm 41 with a handle 42, a first branch 43, a second branch 44 and a split-pin for a spring 45. In addition, each of the two branches 43, 44 in the lock arm 41 have a hole 46, 47 for the third journal 34.

Fig. 4 shows at the bottom a view from above of the lock arm 41 and the handle 42, the first branch 43, the second branch 44, the split-pin for the spring 45 and finally the holes 46 in the first branch 43 and 47 in the second branch 44, respectively, which together form the third journal 34.

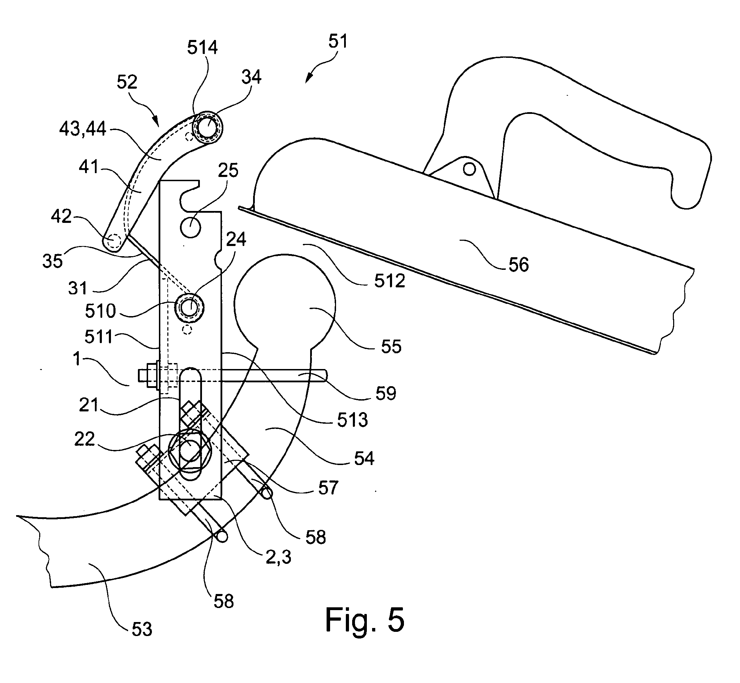

Fig. 5 show how a safety device 51 in a first position 52, which is an open position, interacts with a towing hook 53 defined outside the invention, here provided with a neck 54 with a ball head 55 to be coupled to an associated ball socket 56.

The safety device 51 is seen to be mounted on the towing hook 53 by means of a mounting fitting 57 with mounting brackets 58, which mounting fitting 57 being pivotable around the first journal 22 which is again displaceable in the slot 21 in the first side fitting 2 in the frame 1.

The frame 1 is furthermore fitted with a safety bracket 59 enclosing the neck 54 immediately under the ball head 55.

The jacket 31 appears connected with the frame 1 around the second journal 24, as a second spring 510 is prestressed such that it brings the jacket 31 against a first side 511 of the frame 1 and away from the coupling area 512, which is on the second side 513 of the frame 1, such that ball socket 56 can be brought into and out of engagement with the ball head 55 of the towing hook 53. Hereby is achieved the said first position 52.

In the first position 52, the first and second branches 43, 44 of the lock arm 41 are held against the side fittings 2, 3, as the lock arm 41 is pivotably connected with the jacket 31 through the third journal 34 cooperating with a third spring 514 which is prestressed so that the handle 42 is pressed against the outer side 35 of the jacket 31.

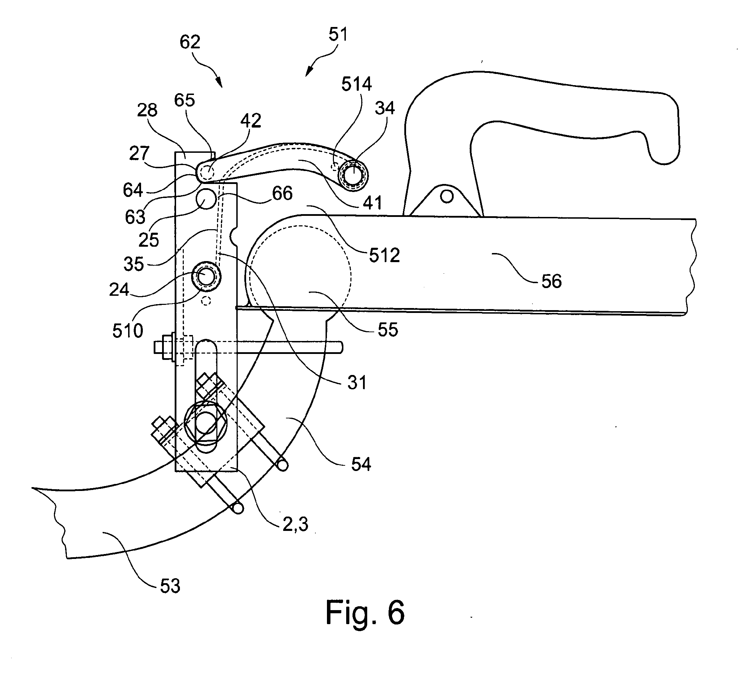

Fig. 6 shows how the safety device 51 in a second position 62, which is a closed position, interacts with a towing hook 53 defined outside the invention, here provided with a neck 54 with a ball head 55, here coupled to the associated ball socket 56.

Compared with Fig. 5, the elements related to the safety device 51 in the second position 62 are here described.

It is noted that the jacket 31 with the lock arm 41 covers the coupling area 512, as the end of the lock arm 41 with the handle 42 engages the second cutout 27, and as the second position 62 is also secured in that the mobility of the lock arm 41 is limited upwardly by the projection 28 of the second side fitting 2. Due to the prestressing of the third spring 514 and the pivotability of the lock arm 41 around the third journal 34, the lock arm 41 has a natural position against a rest surface 623 in the cutout 27 of the second side fitting 2.

Also, the second spring 510 ensures that the jacket 31 in cooperation with the second side fitting 2 through the second journal 24 presses the lock arm 41 against the second side fitting 2 in a safety surface 64. Similarly, the projection 28 has a lock face 65 that further secures the position of the jacket 31 in this second position 62.

The end piece of the lock arm 41 with the handle 42 is thus surrounded by three faces: the rest face 63, the safety face 64 and the lock face 65 when the safety device 51 is in the second position 62. This second position 62 may furthermore be locked in that through the third hole 25 a split-pin is inserted, which then forms a lock edge 66 with the jacket 31 at its outer side 35.

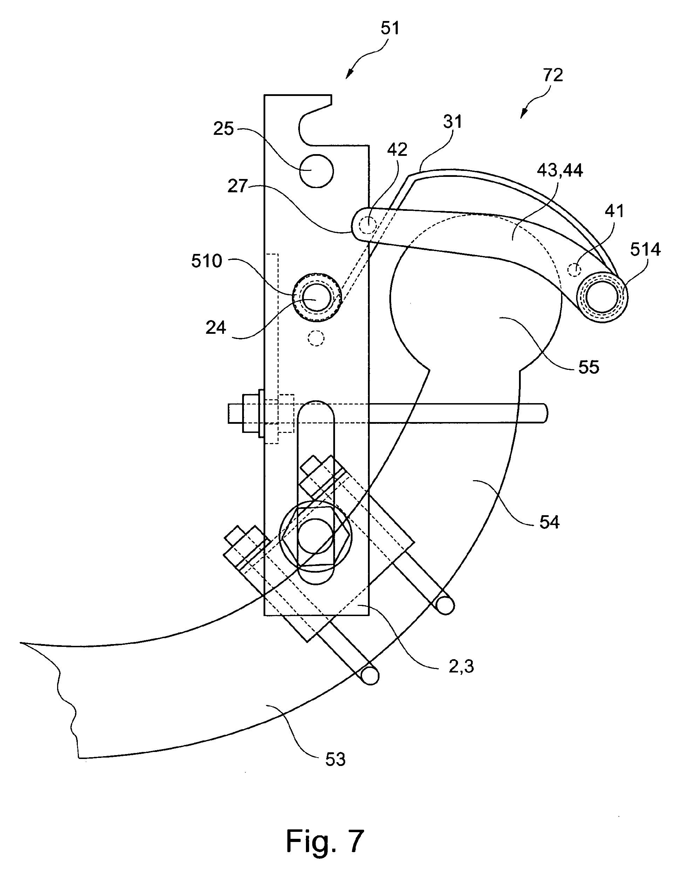

Fig. 7 shows the safety device 51 in a third position 72, which is a protective position, where the safety device 51 interacts with a towing hook 53 defined outside the invention and provided with a neck 54 and a ball head 55, where the ball head 55 is the one primarily to be protected.

Compared with Figs. 5 and 6, only the elements related to the safety device 51 in the third position 72 are here described.

Particularly compared with the description in Fig. 6, the third position 72 is characterised in that the second branch 44 at the end of the lock arm 41 with the handle 42 is provided at the second cutout 27 in the second side fitting 2. The jacket 31 and the first branch 43 and the second branch 44 thereby form protection of the ball head 55 of the towing hook 53.

As described in Fig. 5, the second spring 510 and the third spring 514 have a prestressing ensuring that the jacket 31 in cooperation with the lock arm 41 presses against the cutout 27 in the second side fitting 2.

## Claims

1. A safety device (51) for a tow-bar with a towing hook (53) with a neck (54) and a ball head (55) joined thereto which interact with a ball socket (56) for providing a coupling arrangement between a vehicle and a trailer, **characterised by** having a frame (1) which includes:
- a releasable mounting fitting (57) for mounting the frame (1) on the towing hook (53) via a first journal (22), which frame (1) forming connection with
- a jacket (31) mounted on the frame via a second journal (24) for pivoting between a first position (52) where the jacket (31) is pivoted to a first side (511) so that the ball head (55) and the ball socket (56) can be brought into and out of engagement with each other, respectively, and
- a second position (62) where the jacket is swung to a second side (513) so that the ball head (55) and the ball socket (56) cannot be brought into and out of mutual engagement.

2. Safety device according to claim 1, **characterised in that** the jacket (31) may be pivoted further to the second side (513) to a third position (72) where the jacket (31) is entirely or partially enclosing the ball head (55) when the ball socket (56) is released from the ball head (55).

3. Safety device according to claim 1, **characterised in that** the frame (1) is provided with a slot (21) in which the mounting fitting (57) is mounted sliding.

4. Safety device according to claim 1, **characterised in that** the mounting fitting (57) has at least one mounting bracket (58) for placing around the towing hook (53).

5. Safety device according to claim 1, **characterised in that** the frame (1) is provided with at least one safety bracket (59) for disposition around the neck (54) immediately under the ball head (55).

6. Safety device according to claim 1, **characterised in that** the jacket (31) is angular with two branches and that the other journal (24) is disposed close to a free end of a first branch (32).

7. Safety device according to claim 6, **characterised in that** a locking arm (41) is swivelling connected with the jacket (31) through a third journal (34) disposed close to a free end of a second branch (33), that the lock arm (41) and the frame (1) are adapted with at least one projection and a complementary cutout therefor for every second (62) and third (72) position.

8. Safety device according to claim 7, **characterised in that** the lock arm (41) is U-shaped, having a leg (43, 44) at each side of the jacket.

9. Safety device according to claim 6 and 7, **characterised in that** the first branch of the jacket interacts with the frame (1) around the second journal (24) by a second spring (510) which is prestressed such that the jacket (31) is tilted towards the first side (511); and
- the second branch of the jacket (31) interacts with the lock arm (41) around the third journal (34) by a third spring (514) which is prestressed such that the lock arm (41) is tilted towards the second journal (24).

10. Safety device according to claim 1, **characterised in that** it has a split-pin (25) which is disposed in the frame (1) and forms a locking edge (66) with the jacket (31) in its second (62) or third (72) position.
